(19)

Europäisches Patentamt
European Patent Office
Office européen des brevets

(11) **EP 4 651 412 A1**

(12) **EUROPEAN PATENT APPLICATION**
published in accordance with Art. 153(4) EPC

(43) Date of publication:
**19.11.2025 Bulletin 2025/47**

(21) Application number: **23920832.5**

(22) Date of filing: **27.11.2023**

(51) International Patent Classification (IPC):
**H04L 1/06** (2006.01)

(86) International application number:
**PCT/CN2023/134275**

(87) International publication number:
**WO 2024/164641 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.02.2023 CN 202310126151**

(71) Applicant: **Huawei Technologies Co., Ltd.
Shenzhen, Guangdong 518129 (CN)**

(72) Inventors:
• **CHAI, Xiaomeng
  Shenzhen, Guangdong 518129 (CN)**

• **JIN, Yu
  Shenzhen, Guangdong 518129 (CN)**
• **LI, Yuan
  Shenzhen, Guangdong 518129 (CN)**
• **SUN, Yan
  Shenzhen, Guangdong 518129 (CN)**
• **PANG, Jiyong
  Shenzhen, Guangdong 518129 (CN)**

(74) Representative: **Grünecker Patent- und
Rechtsanwälte
PartG mbB
Leopoldstraße 4
80802 München (DE)**

(54) **CSI TRANSMITTING METHOD, CSI RECEIVING METHOD, AND APPARATUS**

(57)    A CSI sending method, a CSI receiving method, and an apparatus are provided. In the method, a terminal sends CSI at a target layer to an access network device based on an indication of an access network device, where the target layer may be any layer. In comparison with conventional CSI feedback in which the terminal sends PMIs of n layers with highest quality to the access network device, CSI fed back by the terminal can meet a requirement of the access network device, and therefore air interface overheads of sending unnecessary CSI by the terminal are reduced.

```
┌─────────────────┐                    ┌──────────┐
│ Access network  │                    │ Terminal │
│     device      │                    │          │
└─────────────────┘                    └──────────┘
        │                                    │
        │  900: First information, where     │
        │  the first information includes    │
        │  indication information that       │
        │  indicates the terminal to send    │
        │  CSI at a target layer             │
        │───────────────────────────────────▶│
        │                                    │
        │  901: First CSI report, where the  │
        │  first CSI report includes the CSI │
        │  at the target layer               │
        │◀───────────────────────────────────│
        │                                    │
```

FIG. 9

**Description**

CROSS-REFERENCE TO RELATED APPLICATIONS

This application claims priority to Chinese Patent Application No. 202310126151.0, filed with the China National Intellectual Property Administration on February 6, 2023 and entitled "CSI SENDING METHOD, CSI RECEIVING METHOD, AND APPARATUS", which is incorporated herein by reference in its entirety.

TECHNICAL FIELD

Embodiments of this application relate to the field of communication technologies, and in particular, to a CSI sending method, a CSI receiving method, and an apparatus.

BACKGROUND

In a wireless communication network, for example, in a mobile communication network, services supported by the network are increasingly diversified, and therefore requirements that need to be met are increasingly diversified. For example, the network needs to be capable of supporting an ultra-high rate, an ultra-low latency, and/or massive connections. This feature makes network planning, network configuration, and/or resource scheduling increasingly complex. In addition, functions of the network are increasingly powerful. For example, a supported spectrum is increasingly high, a higher-order multiple-input multiple-output (multiple-input multiple-output, MIMO) technology is supported, and new technologies, such as beamforming and/or beam management, are supported. These new requirements, scenarios, and features cause an unprecedented challenge to network planning, operation and maintenance, and efficient operation. To embrace the challenge, an artificial intelligence technology may be introduced into the wireless communication network to implement network intelligence. Based on this, how to send and receive channel state information (channel state information, CSI) in an artificial intelligence wireless communication network is a problem worth studying.

SUMMARY

Embodiments of this application provide a CSI sending method, a CSI receiving method, and an apparatus, to meet a requirement of an artificial intelligence wireless communication network for CSI.

According to a first aspect, a CSI sending method is provided. The method is applied to a first communication apparatus. The first communication apparatus is a terminal, or a chip, a circuit, or the like used in the terminal. The method includes: receiving first information from a second communication apparatus, where the first information includes indication information that indicates the first communication apparatus to send channel state information CSI at a target layer; and sending a first CSI report to the second communication apparatus, where the first CSI report includes the CSI at the target layer.

In the foregoing implementation, the terminal sends the CSI at the target layer to an access network device based on an indication of the access network device, where the target layer may be any layer. In comparison with conventional CSI feedback in which the terminal sends PMIs of n layers with highest quality to the access network device, CSI fed back by the terminal can meet a requirement of the access network device, and therefore air interface overheads of sending unnecessary CSI by the terminal are reduced.

In an implementation, the CSI at the target layer includes one or more of the following indication information: a channel response of the target layer, an eigenvector matrix of the target layer, compression and/or quantization information of the eigenvector matrix, or compression and/or quantization information of the channel response of the target layer.

In the foregoing implementation, the terminal sends the eigenvector matrix of the target layer or the compression and/or quantization information of the channel response to the access network device. In comparison with a case in which the terminal directly sends the eigenvector matrix of the target layer, the channel response, or the like to the access network device, air interface overheads for sending CSI by the terminal can be reduced.

In an implementation, the CSI at the target layer further includes one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In the foregoing implementation, the CSI fed back by the terminal to the access network device in this application may be referred to as ground truth CSI, and the ground truth CSI and conventional CSI may be jointly fed back. For example, a new CSI report quantity may be designed. The CSI report may feed back the ground truth CSI, the conventional CSI, and the like simultaneously, and the ground truth CSI and the conventional CSI are jointly fed back, so that CSI feedback efficiency can be improved.

In an implementation, the method further includes: sending a second CSI report to the second communication apparatus, where the second CSI report includes one or more of the following indication information: an RI, a CQI, or a PMI, and a quantity of layers of PMIs is determined based on the RI.

In the foregoing implementation, the CSI fed back by the terminal to the access network device in this application may be referred to as ground truth CSI, and the ground truth CSI and conventional CSI may be separately fed back. For example, a new CSI type may be designed to feed back the ground truth CSI, and feedback of the ground truth CSI and feedback of the conventional CSI do not affect each other.

In an implementation, the first information further includes indication information that indicates the first communication apparatus to send one or more of the following: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is sent by the first communication apparatus is used for one or more of the following: model training, model inference, model testing, model verification, or model monitoring.

In the foregoing implementation, the first CSI report reported by the terminal to the access network device may be used for AI-related data collection, for example, the foregoing model training, model inference, model testing, model verification, or model monitoring. The terminal sends CSI at a corresponding target layer to the access network device based on the target layer indicated by the access network device, so that an AI data requirement of the access network device can be met.

In an implementation, the first information is configuration information, and the configuration information is used to configure the first communication apparatus to send the CSI at the target layer.

According to a second aspect, a CSI receiving method is provided. The second aspect is a peer-side method corresponding to the first aspect. For beneficial effects, refer to the first aspect. The method is applied to a second communication apparatus. The second communication apparatus is an access network device, or a chip, a circuit, or the like used in the access network device. The method includes: sending first information to a first communication apparatus, where the first information includes indication information that indicates the first communication apparatus to send channel state information CSI at a target layer; and receiving a first CSI report from the first communication apparatus, where the first CSI report includes the CSI at the target layer.

In an implementation, the CSI at the target layer includes one or more of the following indication information: a channel response of the target layer, an eigenvector matrix of the target layer, compression and/or quantization information of the eigenvector matrix, or compression and/or quantization information of the channel response of the target layer.

In an implementation, the CSI at the target layer further includes one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In an implementation, the method further includes: receiving a second CSI report from the first communication apparatus, where the second CSI report includes one or more of the following indication information: an RI, a CQI, or a PMI, and a quantity of layers of PMIs is determined based on the RI.

In an implementation, the first information further includes indication information that indicates the first communication apparatus to send one or more of the following: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is received by the second communication apparatus is used for one or more of the following: model training, model inference, model testing, model verification, or model monitoring.

In an implementation, the first information is configuration information, and the configuration information is used to configure the first communication apparatus to send the CSI at the target layer.

According to a third aspect, a CSI sending method is provided. In an implementation, the method is applied to a first communication apparatus. The first communication apparatus is a terminal, or a chip, a circuit, or the like used in the terminal. Alternatively, the first communication apparatus is an access network device, or a chip, a circuit, or the like used in the access network device. The method includes: sending first information to a second communication apparatus, where the first information includes indication information that indicates the first communication apparatus to send channel state information CSI at a target layer; and sending a first CSI report to the second communication apparatus, where the first CSI report includes the CSI at the target layer.

In the foregoing implementation, the terminal may actively send the CSI at the target layer to the access network device. For example, the terminal sends the indication information at the target layer to the access network device, and the terminal sends the CSI at the target layer to the access network device. Alternatively, the access network device may actively send the CSI at the target layer to the terminal. For example, the access network device sends the indication information at the target layer to the terminal, and the access network device sends the CSI at the target layer to the terminal. The terminal or the access network device may use the collected CSI at the target layer for AI processing, to meet a requirement of AI for CSI data.

In an implementation, the CSI at the target layer includes one or more of the following indication information: a channel response of the target layer, an eigenvector matrix of the target layer, compression and/or quantization information of the eigenvector matrix of the target layer, or compression and/or quantization information of the channel response of the target layer.

In an implementation, the CSI at the target layer may further include one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In an implementation, the method further includes: sending a second CSI report to the second communication apparatus, where the second CSI report includes one or more of the following indication information: an RI, a CQI, or a PMI, and a quantity of layers of PMIs is determined based on the RI.

In an implementation, the first information further includes indication information that indicates the first communication apparatus to send one or more of the following of the target layer: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is sent by the first communication apparatus is used for one or more of the following: model training, model inference, model testing, model verification, or model monitoring.

In an implementation, the first information is the indication information, and the indication information indicates the first communication apparatus to send the CSI at the target layer.

According to a fourth aspect, a CSI receiving method is provided. The fourth aspect is a peer side of the foregoing third aspect. For beneficial effects, refer to the descriptions of the third aspect. The method is applied to a second communication apparatus. The second communication apparatus is an access network device, or a chip or a circuit used in the access network device. Alternatively, the second communication apparatus is a terminal, or a chip, a circuit, or the like used in the terminal. The method includes: receiving first information from a first communication apparatus, where the first information includes indication information that indicates the first communication apparatus to send channel state information CSI at a target layer; and receiving a first CSI report from the first communication apparatus, where the first CSI report includes the CSI at the target layer.

In an implementation, the CSI at the target layer includes one or more of the following indication information: a channel response of the target layer, an eigenvector matrix of the target layer, compression and/or quantization information of the eigenvector matrix of the target layer, or compression and/or quantization information of the channel response of the target layer.

In an implementation, the CSI at the target layer may further include one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In an implementation, the method further includes: receiving a second CSI report from the first communication apparatus, where the second CSI report includes one or more of the following indication information: an RI, a CQI, or a PMI, and a quantity of layers of PMIs is determined based on the RI.

In an implementation, the first information further includes indication information that indicates the first communication apparatus to send one or more of the following of the target layer: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is received by the second communication apparatus is used for one or more of the following: model training, model inference, model testing, model verification, or model monitoring.

In an implementation, the first information is the indication information, and the indication information indicates the first communication apparatus to send the CSI at the target layer.

According to a fifth aspect, an apparatus is provided. The apparatus includes a corresponding unit or module for performing the method in any one of the first aspect to the fourth aspect. The unit or module may be implemented by a hardware circuit, or may be implemented by software, or may be implemented by a combination of a hardware circuit and software.

According to a sixth aspect, an apparatus is provided, and includes a processor and an interface circuit. The processor is configured to communicate with another apparatus through the interface circuit, and perform the method in any one of the first aspect to the fourth aspect. There are one or more processors.

According to a seventh aspect, an apparatus is provided, and includes a processor coupled to a memory. The processor is configured to execute a program stored in the memory, to perform the method in any one of the first aspect to the fourth aspect. The memory may be located inside or outside the apparatus. In addition, there may be one or more processors.

According to an eighth aspect, an apparatus is provided, and includes a processor and a memory. The memory is configured to store computer instructions. When the apparatus runs, the processor executes the computer instructions stored in the memory, to enable the apparatus to perform the method in any one of the first aspect to the fourth aspect.

According to a ninth aspect, a chip system is provided, and includes a processor or a circuit, configured to perform the method in any one of the first aspect to the fourth aspect.

According to a tenth aspect, a computer-readable storage medium is provided. The computer-readable storage medium stores instructions. When the instructions are run on a communication apparatus, the method in any one of the first aspect to the fourth aspect is performed.

According to an eleventh aspect, a computer program product is provided. The computer program product includes a computer program or instructions. When the computer program or the instructions are run by an apparatus, the method in any one of the first aspect to the fourth aspect is performed.

According to a twelfth aspect, a system is provided, and includes a first communication apparatus that performs the method in the first aspect and a second communication apparatus that performs the method in the second aspect, or includes a first communication apparatus that performs the method in the third aspect and a second communication apparatus that performs the method in the fourth aspect.

BRIEF DESCRIPTION OF DRAWINGS

FIG. 1 is a diagram of a communication system according to an embodiment of this application;
FIG. 2 is a diagram of deploying an AI model according to an embodiment of this application;
FIG. 3 is another diagram of deploying an AI model according to an embodiment of this application;
FIG. 4 is a diagram of an architecture of an access network device according to an embodiment of this application;
FIG. 5 is another diagram of an architecture of an access network device according to an embodiment of this application;
FIG. 6 is a diagram of an application architecture of an AI model according to an embodiment of this application;
FIG. 7 is a diagram of a neuron according to an embodiment of this application;
FIG. 8 is a diagram of a layer relationship in a neural network according to an embodiment of this application;
FIG. 9 is a flowchart of sending and receiving CSI according to an embodiment of this application;
FIG. 10 is a diagram of sending and receiving CSI by using a model according to an embodiment of this application;
FIG. 11 is another flowchart of sending and receiving CSI according to an embodiment of this application;
FIG. 12 is still another flowchart of sending and receiving CSI according to an embodiment of this application;
FIG. 13 is a diagram of a structure of an apparatus according to an embodiment of this application; and
FIG. 14 is a diagram of another structure of an apparatus according to an embodiment of this application.

DESCRIPTION OF EMBODIMENTS

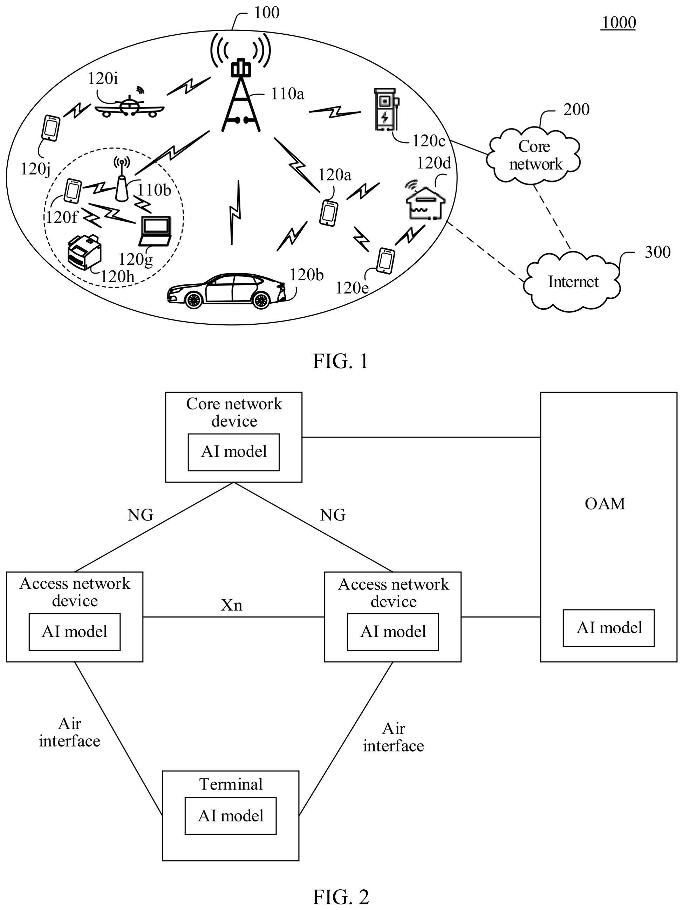

FIG. 1 is a diagram of an architecture of a communication system 1000 to which this application can be applied. As shown in FIG. 1, the communication system 1000 includes a radio access network 100 and a core network 200. Optionally, the communication system 1000 may further include an internet 300.

The radio access network 100 may include at least one access network device (for example, 100a and 110b in FIG. 1), and may further include at least one terminal (for example, 120a to 120j in FIG. 1). The terminal is connected to the access network device in a wireless manner, and the access network device is connected to the core network in a wireless or wired manner. The core network device and the access network device may be different physical devices that are independent of each other, or functions of the core network device and logical functions of the access network device may be integrated into a same physical device, or a part of the functions of the core network device and a part of the functions of the access network device may be integrated into one physical device. Terminals may be connected to each other in a wired or wireless manner, and access network devices may be connected to each other in a wired or wireless manner. FIG. 1 is merely a diagram. The communication system 1000 may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be the access network device, or may be an apparatus that can support the access network device in implementing the functions, for example, a chip system, a hardware circuit, a software module, or a combination of a hardware circuit and a software module. The apparatus may be installed in the access network device, or may be matched with the access network device for use. In this application, the chip system may include a chip, or may include a chip and another discrete component. For ease of description, the following describes the technical solutions provided in this application by using an example in which the apparatus configured to implement the function of the access network device is the access network device.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

(2) Central unit (central unit, CU) and distributed unit (distributed unit, DU)

An access network device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

The division into processing functions of the CU and the DU based on protocol layers is merely an example, and may be another division manner. For example, the CU or the DU may have functions of more protocol layers through division. For another example, the CU or the DU may have some processing functions of the protocol layers through division. In an implementation, a part of functions of the RLC layer and functions of protocol layers above the RLC layer are set on the CU, and remaining functions of the RLC layer and functions of protocol layers below the RLC layer are set on the DU. In another implementation, division of functions of the CU or the DU may alternatively be performed based on service types or other system requirements. For example, division may be performed based on latencies. Functions whose processing time needs to meet a latency requirement are set on the DU, and functions whose processing time does not need to meet the latency requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at a physical layer (physical layer, PHY). For example, the DU may implement higher-layer functions of the PHY layer, and the RU may implement lower-layer functions of the PHY layer. When used for sending, a function of the PHY layer may include one or more of the following: cyclic redundancy check (cyclic redundancy check, CRC) code addition, channel encoding, rate matching, scrambling, modulation, layer mapping, precoding, resource mapping, physical antenna mapping, or a radio frequency sending function. When used for receiving, a function of the PHY layer may include one or more of the following: CRC check, channel decoding, de-rate matching, descrambling, demodulation, layer de-mapping, channel detection, resource de-mapping, physical antenna de-mapping, or a radio frequency receiving function. The higher-layer function of the PHY layer may include a part of functions of the PHY layer. For example, the part of functions are closer to the MAC layer. The lower-layer function of the PHY layer may include another part of functions of the PHY layer. For example, the part of functions are closer to the radio frequency function. For example, the higher-layer functions of the PHY layer may include CRC code addition, channel coding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include CRC code addition, channel coding, rate matching, scrambling, modulation, layer mapping, and precoding. The lower-layer functions of the PHY layer may include resource mapping, physical antenna mapping, and radio frequency sending functions. For example, the higher-layer functions of the PHY layer may include CRC check, channel decoding, de-rate matching, decoding, demodulation, and layer de-mapping, and the lower-layer functions of the PHY layer may include channel detection, resource de-mapping, physical antenna de-mapping, and the radio frequency receiving function. Alternatively, the higher-layer functions of the PHY layer may include CRC check, channel decoding, de-rate matching, decoding, demodulation, layer de-mapping, and channel detection, and the lower-layer functions of the PHY layer may include resource de-mapping, physical antenna de-mapping, and the radio frequency receiving function.

For example, functions of the CU may be implemented by one entity, or may be implemented by different entities. For example, the function of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by these modules also fall within the protection scope of embodiments of this application.

In a possible implementation, the access network device includes the CU-CP, the CU-UP, the DU, and the RU. For example, embodiments of this application are executed by the DU, or the DU and the RU, or the CU-CP, the DU, and the RU, or the CU-UP, the DU, and the RU. This is not limited. Methods performed by the modules also fall within the protection scope of embodiments of this application.

The terminal may also be referred to as a terminal device, user equipment (user equipment, UE), a mobile station, a mobile terminal, or the like. The terminal may be widely used in communication in various scenarios, for example, including but not limited to one or more of the following scenarios: device-to-device (device-to-device, D2D), vehicle to everything (vehicle to everything, V2X), machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, or a smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in this application.

In this application, an apparatus configured to implement the functions of the terminal may be the terminal, or may be an apparatus that can support the terminal in implementing the functions, for example, a chip system, a hardware circuit, a software module, or a combination of the hardware circuit and the software module. The apparatus may be installed in the terminal or may be matched with the terminal for use. For ease of description, the following describes technical solutions provided in this application by using an example in which the apparatus configured to implement the function of the terminal is the terminal.

The access network device and the terminal may be at fixed locations, or may be mobile. The access network device and/or the terminal may be deployed terrestrially, including an indoor device or an outdoor device, a handheld device, or a vehicle-mounted device; or may be deployed on the water; or may be deployed on an airplane, a balloon, and a satellite in the air. Application scenarios of the access network device and the terminal are not limited in this application. The access network device and the terminal may be deployed in a same scenario or different scenarios. For example, the access network device and the terminal are both deployed on the land; or the access network device is deployed on the land, and the terminal is deployed on the water. Examples are not provided one by one.

Roles of the access network device and the terminal may be relative. For example, a helicopter or an uncrewed aerial vehicle 120i in FIG. 1 may be configured as a mobile access network device. For the terminal 120j that accesses the radio access network 100 through 120i, the terminal 120i is an access network device. However, for the access network device 110a, 120i is a terminal, that is, 110a and 120i communicate with each other according to a radio air interface protocol. Alternatively, 110a and 120i communicate with each other by using an interface protocol between the access network devices. In this case, for 110a, 120i is also an access network device. Therefore, both the access network device and the terminal may be collectively referred to as communication apparatuses. 110a and 110b in FIG. 1 may be referred to as communication apparatuses having a function of the access network device, and 120a to 120j in FIG. 1 may be referred to as communication apparatuses having a function of the terminal.

Communication between an access network device and a terminal, between access network devices, or between terminals may be performed by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in this application.

In this application, an independent network element that is referred to as an AI network element, an AI node, or the like may be introduced into the communication system shown in FIG. 1 to implement an AI-related operation. The AI network element may be directly connected to an access network device in the communication system, or may be indirectly connected to an access network device via a third-party network element. The third-party network element may be a core network element such as an authentication management function (authentication management function, AMF) or a user plane function (user plane function, UPF). Alternatively, an AI function, an AI module, or an AI entity may be built in another network element in the communication system to implement an AI-related operation. The another network element may be an access network device, a core network device, a network management system, or the like. In this case, a network element that performs an AI-related operation may be a network element with a built-in AI function. An operation, administration, and maintenance (operation, administration, and maintenance, OAM) is configured to perform operation, management, maintenance, and the like on an access network device and/or a core network device.

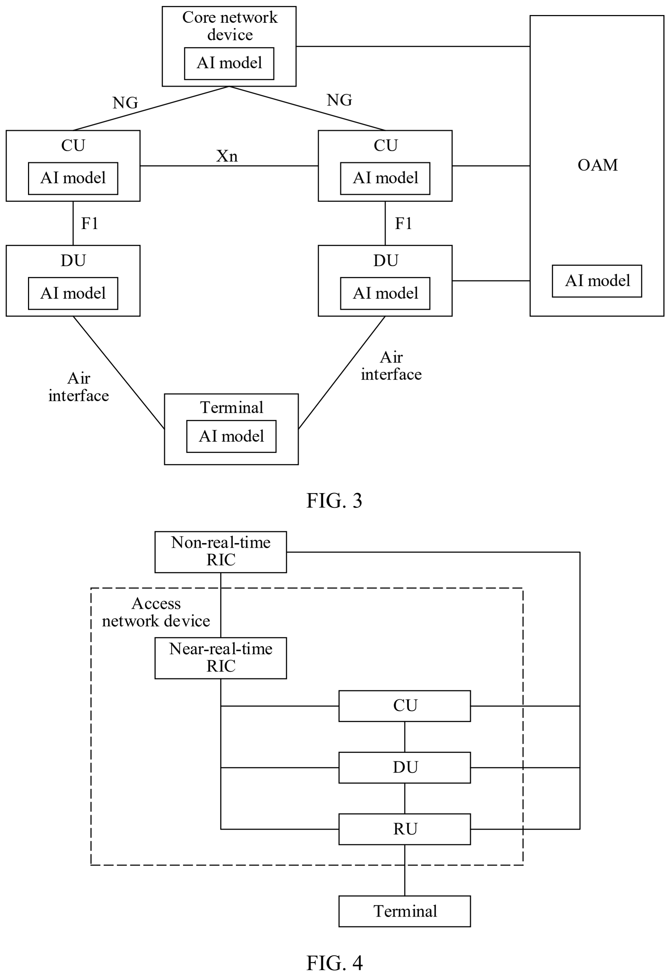

As shown in FIG. 2 or FIG. 3, an AI model may be deployed on at least one of a core network device, an access network device, a terminal device, an OAM, or the like, and a corresponding function is implemented by using the AI model. In this application, AI models deployed on different nodes may be the same or different. The models are different in terms of at least one of the following: different structure parameters of the model, for example, different quantities of layers and/or weights of the model, different input parameters of the model, or different output parameters of the model. Different input parameters of the model and/or different output parameters of the model may be described as different functions of the model. Different from FIG. 2, in FIG. 3, a function of the access network device is separated into a CU and a DU. Optionally, the CU and the DU may be a CU and a DU in an O-RAN architecture. One or more AI models may be deployed in the CU, and/or one or more AI models may be deployed in the DU. Optionally, further, the CU in FIG. 3 may be split into a CU-CP and a CU-UP. Optionally, one or more AI models may be deployed in the CU-CP, and/or one or more AI models may be deployed in the CU-UP. Optionally, in FIG. 2 or FIG. 3, an OAM of the access network device and an OAM of the core network device may be separately deployed.

In this application, the access network device may use the O-RAN architecture. The following describes an example of the O-RAN architecture. This is not intended to limit this application.

In a first design, as shown in FIG. 4, the access network device includes a near-real-time access network intelligent controller (RAN intelligent controller, RIC), a CU, a DU, an RU, and the like. The near-real-time RIC is configured to perform model training and inference. For example, the near-real-time RIC may train an AI model, and use the AI model for inference. For example, the near-real-time RIC may obtain information on a network side or a terminal side from one or more of the CU, the DU, the RU, or a terminal, where the information may be used as training data or inference data. For example, the foregoing information may be used as training data, and the near-real-time RIC may train the AI model by using the collected training data. Alternatively, the foregoing information may be used as inference data, and the near-real-time RIC may perform model inference based on the collected inference data and the AI model, to determine an inference result. Optionally, the near-real-time RIC may send the inference result to one or more of the CU, the DU, the RU, the terminal, or the like. Optionally, the CU and the DU may exchange the inference result. For example, the near-real-time RIC sends the inference result to the CU, and the CU forwards the inference result to the DU. Optionally, the DU and the RU may exchange the inference result. For example, the near-real-time RIC sends the inference result to the DU; or the near-real-time RIC sends the inference result to the CU, and the CU forwards the inference result to the DU; and the DU forwards the inference result to the RU.

In the first design, the near-real-time RIC is included in the access network device. Whether a non-real-time RIC is included outside the access network device is not limited. For example, the non-real-time RIC may be included outside the access network device, or the non-real-time RIC may not be included outside the access network device.

In a second design, as shown in FIG. 4, a non-real-time RIC is included outside the access network device. For example, the non-real-time RIC may be located in an OAM or a core network device. This is not limited. The non-real-time RIC may train an AI model and use the AI model for inference. Optionally, the non-real-time RIC may collect information on a network side or a terminal side from one or more of a CU, a DU, an RU, a terminal, or the like, where the information may be used as training data or inference data. For example, the information is used as training data, and the non-real-time RIC may train the AI model by using the training data. Alternatively, the information is used as inference data, and the non-real-time RIC uses the inference data and the AI model to determine an inference result. Optionally, the non-real-time RIC may send the inference result to one or more of the CU, the DU, the RU, the terminal, or the like. Optionally, the CU and the DU may exchange the inference result. The DU and the RU may exchange the inference result.

In the second design, the non-real-time RIC is included outside the access network device. Whether the access network device includes a near-real-time RIC is not limited. For example, the access network device may include the near-real-time RIC, or the access network device may not include the near-real-time RIC.

In a third design, as shown in FIG. 4, a near-real-time RIC is included in the access network device, and a non-real-time RIC is included outside the access network device. Similar to the first design, the near-real-time RIC may perform model training and inference, and/or, similar to the second design, the non-real-time RIC may perform model training and inference, and/or, the non-real-time RIC may perform model training, and the near-real-time RIC may perform model inference. For example, the non-real-time RIC may send a trained AI model to the near-real-time RIC, and the near-real-time RIC uses the AI model for model inference. Optionally, the non-real-time RIC and/or the near-real-time RIC may collect information on a network side or a terminal side from one or more of a CU, a DU, an RU, a terminal, or the like, where the information may be used as training data or inference data. For example, the information is used as training data, and the non-real-time RIC trains the AI model by using the training data. The information is used as inference data, and the near-real-time RIC uses the AI model and the inference data to determine an inference result. Optionally, the near-real-time RIC may send the inference result to one or more of the CU, the DU, the RU, the terminal, or the like. Optionally, the CU and the DU may exchange the inference result. The DU and the RU may exchange the inference result.

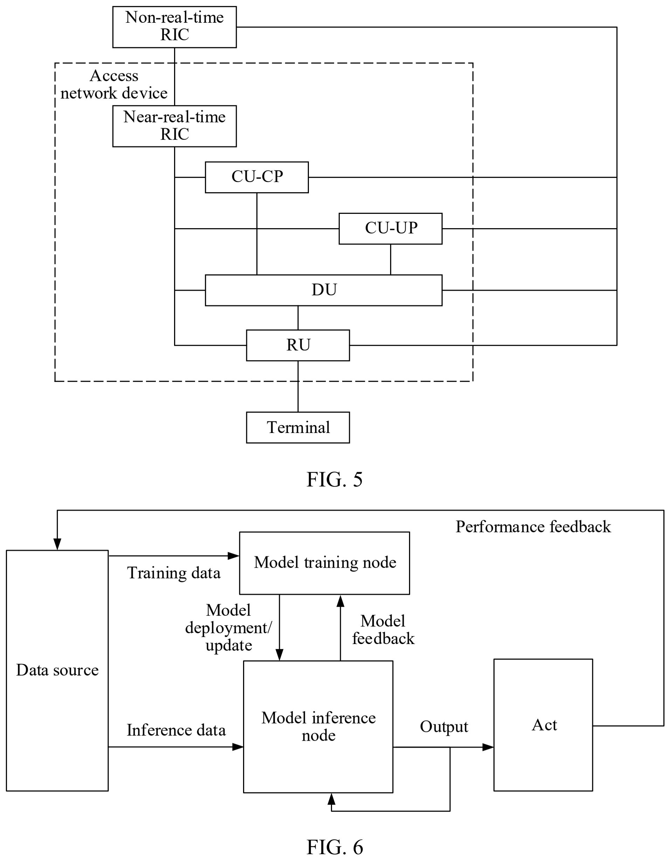

FIG. 5 shows another O-RAN architecture according to this application. Compared with FIG. 4, in FIG. 5, a CU is separated into a CU-CP, a CU-UP, and the like.

In this embodiment of this application, a second communication apparatus may perform an AI-related operation on received channel state information (channel state information, CSI). The following describes an AI technology, and the descriptions are not intended to limit this application.

An AI model is a specific implementation of an AI function. The AI model represents a mapping relationship between an input and an output of the model. The AI model may be a neural network, a linear regression model, a decision tree model, a support vector machine (support vector machine, SVM), a Bayesian network, a Q-learning model, another machine learning model, or the like. In this application, the AI function may include one or more of the following: data collection (collection of training data and/or inference data), data preprocessing, model training (model learning), model information release (configuration of model information), model verification, model inference, inference result release, or the like. In this application, the AI model may be referred to as a model for short.

FIG. 6 is a diagram of an application architecture of the AI model. A data source (data source) is configured to store training data and inference data. A model training node (model training host) analyzes or trains the training data (training data) provided by the data source, to obtain the AI model, and deploys the AI model on a model inference node (model inference host). Optionally, the model training node may further update the AI model that has been deployed on the model inference node. The model inference node may further feed back related information of the deployed model to the model training node, so that the model training node performs optimization, update, or the like on the deployed AI model.

Obtaining the AI model through learning by the model training node is equivalent to obtaining the mapping relationship between the input and the output of the model through learning by the model training node by using the training data. The model inference node uses the AI model to perform inference based on the inference data provided by the data source, to obtain an inference result. The method may alternatively be described as follows: The model inference node inputs the inference data to the AI model, and obtains the output by using the AI model, where the output is an inference result. The inference result may indicate a configuration parameter used (executed) by an actor object, and/or an operation performed by the actor object. The inference result may be planned by an actor (actor) entity in a unified manner, and sent to one or more actor objects (for example, network entities) for execution. Optionally, the actor entity or the actor object may feed back a parameter or a measurement result of a measurement quantity collected by the actor entity or the actor object to the data source. This process may be referred to as performance feedback, and the fed-back parameter may be used as the training data or the inference data. Optionally, feedback information related to model performance may be further determined based on the inference result that is output by the model inference node, and the feedback information is fed back to the model inference node; and the model inference node may feed back performance information of the model to the model training node based on the feedback information, so that the model training node performs optimization, update, or the like on the deployed AI model. This process may be referred to as model feedback.

The AI model may be a neural network or another machine learning model. The neural network is used as an example. The neural network is a specific implementation form of a machine learning technology. According to a universal approximation theorem, the neural network can theoretically approximate any continuous function, so that the neural network has a capability of learning arbitrary mapping. Therefore, the neural network can accurately perform abstraction modeling for a complex high-dimension problem.

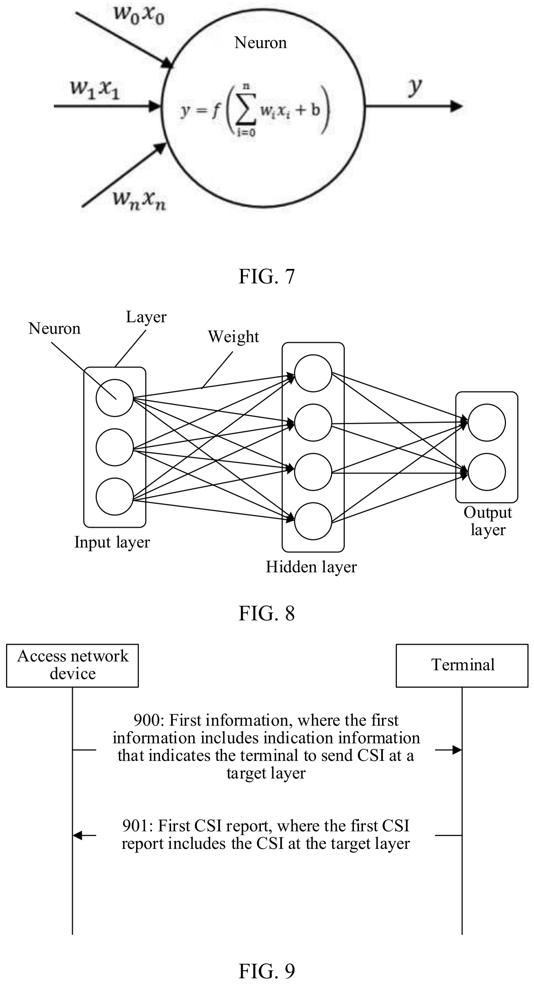

An idea of the neural network comes from a neuron structure of brain tissue. Each neuron performs a weighted summation operation on input values of the neuron, and outputs a result of weighted summation through an activation function. FIG. 7 is a diagram of a neuron structure. It is assumed that input values of a neuron are $x = [x_0, x_1, \ldots, x_n]$, weights

corresponding to the input values are respectively w = [w, $w_1$, ... , $w_n$], and a bias of weighted summation is b. A form of the activation function may be diversified. It is assumed that an activation function of one neuron is y = f(z) = max(0, z). In this case, an output of the neuron is $y = f\left(\sum_{i=0}^{i=n} w_i * x_i + b\right) = \max\left(0, \sum_{i=0}^{i=n} w_i * x_i + b\right)$. For another example, if an activation function of a neuron is y = f(z) = z, an output of the neuron is $y = f\left(\sum_{i=0}^{i=n} w_i * x_i + b\right) = \sum_{i=0}^{i=n} w_i * x_i + b$. $x_i$, $w_i$, and b each may be any possible value such as a decimal, an integer (for example, 0, a positive integer, or a negative integer), or a complex number. Activation functions of different neurons in the neural network may be the same or different.

The neural network usually includes a multi-layer structure, and each layer may include one or more neurons. Increasing a depth and/or a width of the neural network can improve an expression capability of the neural network, and provide more powerful information extraction and abstraction modeling capabilities for complex systems. The depth of the neural network may be a quantity of layers included in the neural network, and a quantity of neurons included in each layer may be referred to as a width of the layer. FIG. 8 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to an intermediate hidden layer, then the hidden layer transfers a calculation result to the output layer or an adjacent hidden layer, and finally, the output layer obtains an output result of the neural network. One neural network may include one hidden layer or a plurality of hidden layers that are sequentially connected. This is not limited. In a training process of the neural network, a loss function may be defined. The loss function describes a gap or a difference between an output value of the neural network and an ideal target value of the neural network. A specific form of the loss function is not limited in this application. The training process of the neural network is a process of adjusting a parameter of the neural network, such as the quantity of layers and the width of the neural network, a weight of the neuron, and/or a parameter in the activation function of the neuron, so that a value of the loss function is less than a threshold or meets a target requirement.

In communication systems such as long term evolution (long term evolution, LTE) and new radio (new radio, NR), an access network device needs to obtain downlink channel state information (channel state information, CSI), to determine configurations such as a resource for scheduling a downlink data channel of a terminal, a modulation and coding scheme (modulation and coding scheme, MCS), and precoding. In a time division duplex (time division duplex, TDD) system, because there is reciprocity between an uplink channel and a downlink channel, the access network device may obtain uplink CSI by measuring an uplink reference signal, to infer downlink CSI. For example, the uplink CSI is used as the downlink CSI. In a frequency division duplex (frequency division duplex, FDD) system, uplink and downlink reciprocity cannot be ensured, and a terminal measures a downlink reference signal to obtain downlink CSI. For example, the terminal measures a downlink reference signal such as a channel state information reference signal (channel state information reference signal, CSI-RS) or a synchronization signal block (synchronization signal/physical broadcast channel block, SSB), to obtain the downlink CSI. In an implementation, the terminal generates a CSI report in a manner such as protocol predefinition or configuration by the access network device, where the CSI report carries the downlink CSI measured by the terminal, and reports the CSI report to the access network device, so that the access network device can obtain the downlink CSI.

In an NR protocol, a downlink CSI feedback procedure includes: The access network device sends the CSI-RS to the terminal. The terminal performs channel measurement, interference measurement, and the like based on the CSI-RS, to obtain a measurement result; and determines feedback amounts such as a rank indicator (rank indicator, RI), a channel quality indicator (channel quality indicator, CQI), and a precoding matrix indication (precoding matrix indication, PMI) based on the measurement result. The terminal reports the downlink CSI to the access network device, where the downlink CSI includes information such as the RI, the CQI, and the PMI that are measured by the terminal. The RI indicates a quantity of layers for downlink transmission recommended by the terminal, the CQI indicates an MCS supported by a current downlink channel condition recommended by the terminal, and the PMI indicates a precoding scheme recommended by the terminal.

Embodiments of this application relate to precoding. The following describes a precoding technology.

The precoding technology is an important way to increase a communication rate. In the precoding technology, a transmitting end uses a plurality of antennas (also referred to as antenna ports) to assign a weight to sent data of each antenna, to achieve a beamforming effect, so that a signal sent by the transmitting end better matches a channel condition. For example, downlink precoding is used as an example. If a downlink signal sent by the access network device is X, a downlink channel is H, a downlink precoding matrix is W, and noise is N0, a downlink signal sent by the access network device is S=WX, and a downlink signal received by the terminal is Y=HWX+N0.

A quantity of layers fed back by the PMI corresponds to the RI. For example, if the RI indicates n layers for downlink transmission, the PMI indicates n layers of precoding matrices. For each layer of PMIs, the access network device may precode a downlink signal by using a corresponding PMI, to implement beamforming and send the downlink signal to the terminal. In other words, the access network device performs precoding by using each layer of PMIs, to form a corresponding beam, and sends the downlink signal to the terminal by using the corresponding beam, so that beamforming can be implemented, and transmission quality of the downlink signal can be improved.

The foregoing CSI feedback mechanism is designed for downlink precoding, and a quantity of layers of PMIs fed back by the terminal is consistent with a quantity of layers indicated by the RI. For example, if the RI indicates n layers for downlink transmission, the terminal needs to feed back a PMI corresponding to each of the n layers to the access network device. In other words, the terminal needs to feed back n layers of PMIs to the access network device. After AI is introduced, in addition to downlink precoding, the PMI may be further used for data collection and the like in the AI. In an implementation, the access network device may not need the n layers of PMIs. Therefore, in the foregoing CSI feedback mechanism, the terminal determines to feed back the n layers of PMIs with highest channel quality, and may not flexibly adapt to a requirement for AI-related data collection on an access network device side.

An embodiment of this application provides a CSI sending method and a CSI receiving method, including: A first communication apparatus receives first information from a second communication apparatus, where the first information includes indication information that indicates the first communication apparatus to send CSI at a target layer. The first communication apparatus sends a first CSI report to the second communication apparatus, where the first CSI report includes the CSI at the target layer. For example, the first communication apparatus is a terminal, or a chip, a circuit, or the like used in the terminal. The second communication apparatus is an access network device, or a chip, a circuit, or the like used in the access network device. In the method in this application, the access network device sends indication information of CSI at specific layers to the terminal, and the terminal sends CSI at a corresponding layer to the access network device based on an indication of the access network device. The terminal sends the CSI at the corresponding layer to the access network device based on the indication of the access network device, to meet a requirement for AI-related data collection on an access network device side.

As shown in FIG. 9, an example in which a first communication apparatus is a terminal and a second communication apparatus is an access network device is used to provide a procedure, including the following steps.

Step 900: The terminal receives first information from the access network device, where the first information includes indication information that indicates the terminal to send CSI at a target layer.

For example, the first information may be configuration information, and the configuration information is used to configure the terminal to send the CSI at the target layer. The first information may be carried in an RRC message, a MAC CE, a downlink control information (downlink control information, DCI), or the like. This is not limited. In an implementation, the access network device may send an RRC message to the terminal, where the RRC message is used to configure a CSI report, and the configured CSI report may be referred to as a CSI report configuration. The terminal sends the CSI report to the access network device based on the CSI report configuration. In this embodiment of this application, the first information may be carried in the RRC message for configuring the CSI report.

In another implementation, the access network device configures a plurality of CSI reports for the terminal, and each configured CSI report may be referred to as a CSI report configuration. Then, the access network device sends a MAC CE or DCI to the terminal to activate one of CSI reporting configurations, and the terminal sends the CSI report to the access network device based on the activated CSI reporting configuration. The first information may be carried in the MAC CE or the DCI for activating the CSI report. In still another implementation, the access network device may send, to the terminal, DCI for scheduling the CSI report, and when receiving scheduling of the DCI, the terminal sends the CSI report to the access network device. Optionally, the CSI report may be carried on a data channel for transmission, for example, carried on a physical uplink shared channel (physical uplink shared channel, PUSCH) for transmission. This is not limited. The first information may be carried in the DCI for scheduling the CSI report or the like. Alternatively, the first information may be independent information. An index of a CSI report configuration associated with the first information is indicated in the first information, or an index of the first information and the like are indicated in the CSI report configuration, to establish a relationship between the first information and the CSI report, that is, to indicate a CSI report to which the first information is specifically applied. For example, the terminal sends the CSI report to the access network device based on the CSI report configuration. The CSI report configuration may be used to configure a time-frequency resource, a manner, and the like for sending the CSI report by the terminal. This is not limited. The access network device may indicate, by using the first information in step 900, the terminal to send the CSI at the target layer. In this embodiment of this application, a correspondence between the CSI configuration report and the first information is established, to indicate a specific CSI report or specific CSI reports in which the terminal sends the CSI at the target layer. Alternatively, for example, the correspondence between the first information and the CSI report may be predefined, specified in a protocol, or default. For example, there are a plurality of types of CSI reports, and it is predefined that the CSI at the target layer is sent in one or more specific types of CSI reports. Alternatively, when the first information takes effect, the first information may be applied to a predefined CSI report, a CSI report specified in a protocol, a default CSI report, or the like.

As described above, the first information includes the indication information that indicates the terminal to send the CSI at the target layer. The target layer may be any layer. For example, the target layer may be one layer, or a plurality of layers. The plurality of layers may be a plurality of consecutive layers, a plurality of inconsecutive layers, or the like. This is not limited. The first information may indicate, by using a bitmap, the terminal to send the CSI at the target layer. For example, the access network device may indicate, by using N bits (bits), the terminal to send CSI at specific target layers in N layers. Each bit represents one layer. For example, 1 indicates that the terminal needs to send CSI at a corresponding layer, and 0 indicates that the terminal does not need to send CSI at a corresponding layer. Alternatively, for example, 0 indicates that the terminal needs to send CSI at a corresponding layer, and 1 indicates that the terminal does not need to send CSI at a corresponding layer. For example, if the indication information included in the first information sent by the access network device to the terminal is 1100, it indicates that the terminal needs to send CSI at a first layer and CSI at a second layer. The first layer and the second layer may be considered as target layers. For a third layer and a fourth layer, the terminal no longer sends corresponding CSI. Alternatively, the first information may indicate, in a specific indication manner, the terminal to send the CSI at the target layer. For example, the terminal is indicated, by using N bits, to send CSI at specific layers in $2^N$ layers. For example, 00 indicates to send CSI at a first layer, 01 indicates to send CSI at a second layer, 10 indicates to send CSI at a third layer, and 11 indicates to send CSI at a fourth layer. Alternatively, the first information may indicate, in a specific indication manner, the terminal to no longer send CSI at specific layers. A remaining layer that is not indicated is considered as a layer at which CSI needs to be sent, that is, the remaining layer that is not indicated is considered as the target layer. For example, the terminal is indicated, by using 2 bits, not to send CSI at specific layers. For example, 00 indicates not to send CSI at a first layer, 01 indicates not to send CSI at a second layer, 10 indicates not to send CSI at a third layer, and 11 indicates not to send CSI at a fourth layer. If the first information sent by the access network device to the terminal includes 00, the terminal determines not to send the CSI at the first layer, and sends the CSI at the second layer to the fourth layer. The second layer to the fourth layer may be considered as target layers. Alternatively, a plurality of layer combinations may be predefined, and the first information may indicate, by using specific indication information, the terminal device to send CSI of a specific layer combination. For example, four layer combinations are predefined: a first layer, a second layer and a third layer, the first layer and the third layer, and the third layer and a fourth layer. The terminal may be indicated to send, by using 2 bits, CSI at a specific layer combination. A layer combination that is indicated by the access network device and at which CSI needs to be sent may be considered as the target layer. Alternatively, the access network device may indicate a layer combination at which CSI does not need to be sent. For a layer combination that is not indicated by the access network device, the terminal considers that the layer combination is the target layer at which CSI needs to be sent.

Step 901: The terminal sends a first CSI report to the access network device, where the first CSI report includes the CSI at the target layer.

As described above, an association relationship between the first information and the CSI report may be established. For a CSI report for which the association relationship is established, when the CSI report is sent, the CSI at the target layer is sent. This is not limited. In this embodiment of this application, it may be considered that an association relationship between the first information and the first CSI report is established.

In this embodiment of this application, the CSI sent by the terminal to the access network device may be ground truth CSI. The ground truth CSI may be an eigenvector matrix, a channel response, compression and/or quantization information of the channel response, compression and/or quantization information of the eigenvector matrix, or the like. This is not limited. In other words, in this embodiment of this application, the CSI at the target layer that is sent by the terminal to the access network device includes one or more of the following indication information: a channel response of the target layer, an eigenvector matrix of the target layer, compression and/or quantization information of the eigenvector matrix of the target layer, compression and/or quantization information of the channel response of the target layer, or the like.

In an implementation, the access network device sends a downlink reference signal to the terminal, and the terminal measures the downlink reference signal to determine a downlink channel response H; and performs eigen decomposition or singular value decomposition on the downlink channel response H or a covariance matrix of the downlink channel response H to obtain an eigenvector matrix V of a downlink channel response. Each row or each column of the eigenvector matrix V may be referred to as an eigenvector. For example, corresponding eigenvectors may be sorted based on eigenvalues or singular values, for example, in descending or ascending order, to separately obtain an eigenvector of the first layer, an eigenvector of the second layer, an eigenvector of the third layer, and the like. Optionally, a frequency domain dimension is considered. A frequency domain dimension is added to each eigenvector, to obtain an eigenvector matrix of the first layer, an eigenvector matrix of the second layer, an eigenvector matrix of the third layer, and the like. Alternatively, a frequency domain dimension is not considered. The eigenvector of the first layer, the eigenvector of the second layer, the eigenvector of the third layer, and the like may also be referred to as an eigenvector matrix of the first layer, an eigenvector matrix of the second layer, an eigenvector matrix of the third layer, and the like. Optionally, the access network device and the terminal may agree on a correspondence between an eigenvector matrix and a layer in advance in a specific manner, so that the access network device and the terminal have a consistent understanding of the correspondence between the eigenvector matrix and the layer. For example, the access network device and the terminal may agree that eigenvector matrices may be sorted in descending order based on eigenvalues or singular values, to separately obtain the eigenvector matrix of the first layer, the eigenvector matrix of the second layer, the eigenvector matrix of the third layer, and the like.

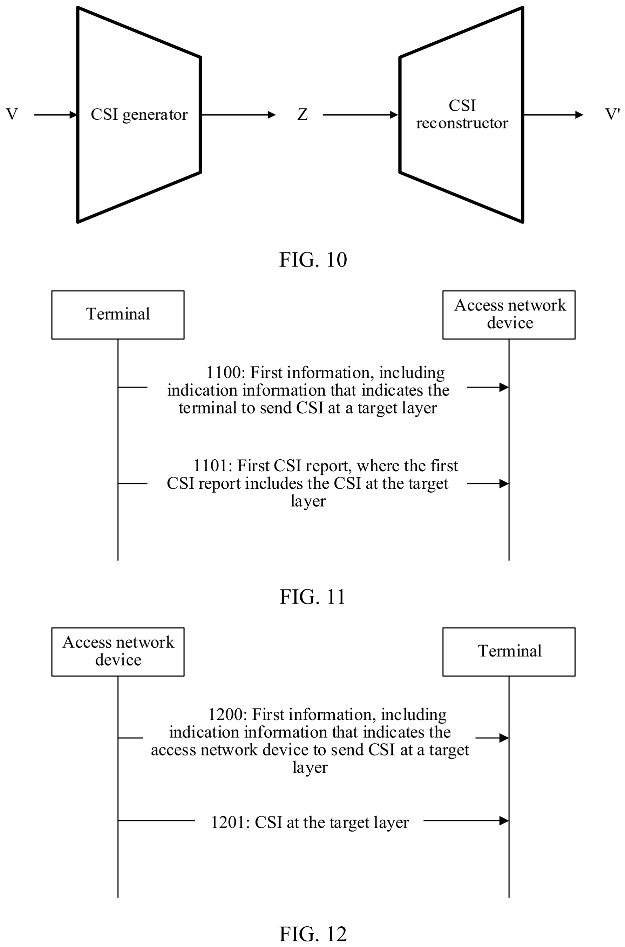

In another implementation, as shown in FIG. 10, after obtaining the eigenvector matrix V of the target layer, the terminal may input the eigenvector matrix V of the target layer into a CSI generator, and an output of the CSI generator is a compressed eigenvector matrix Z of the target layer. The terminal sends the compressed eigenvector matrix Z of the target layer to the access network device. The access network device inputs the received compressed eigenvector matrix Z of the target layer into a CSI reconstructor, and an output of the CSI reconstructor is a restored eigenvector matrix V' of the target layer. In the foregoing implementation, the terminal does not directly send the eigenvector matrix of the target layer to the access network device, but sends the compressed eigenvector matrix of the target layer, so that CSI sending overheads can be reduced. It may be understood that both the CSI generator and the CSI reconstructor are pre-trained models. A function of the CSI generator includes compressing the eigenvector matrix of the target layer, and a function of the CSI reconstructor includes restoring the compressed eigenvector matrix of the target layer. Alternatively, the terminal quantizes the eigenvector matrix of the target layer, and the terminal sends a quantized eigenvector matrix of the target layer to the access network device. The access network device restores the quantized eigenvector matrix of the target layer, to obtain the eigenvector matrix of the target layer. Quantization is a process of changing the eigenvector matrix of the target layer from a continuous value to a discrete value. Alternatively, the terminal may perform compression and quantization processing on the eigenvector matrix of the target layer. For example, the terminal may perform compression and then quantization, or perform quantization and then compression, or perform compression and quantization simultaneously. This is not limited. The terminal sends the compressed and quantized eigenvector matrix of the target layer to the access network device, and the access network device restores the original eigenvector matrix of the target layer.

In another implementation, the access network device measures a downlink reference signal to determine a downlink channel response H; and performs eigen decomposition or singular value decomposition on the downlink channel response H or a covariance matrix of the downlink channel response H to obtain a channel response of each layer. Singular value decomposition (singular value decomposition, SVD) is used as an example. SVD(H)=U, S, V, that is, H=U*S*V, where V is an eigenvector matrix, and a channel response H of an $i^{th}$ layer is U(:, i)*S(i)*V(i, :). U(:, i) represents an $i^{th}$ column of U, S(i) represents an $i^{th}$ eigenvalue, and V(i, :) represents an $i^{th}$ row of V. The terminal may send the channel response of the target layer to the access network device. Alternatively, the terminal may compress and/or quantize the channel response of the target layer, and the terminal sends a compressed and/or quantized channel response of the target layer to the access network device. The access network device restores the compressed and/or quantized channel response of the target layer.

Optionally, the CSI at the target layer that is sent by the terminal to the access network device may further include one or more of the following indication information: an eigenvalue or a singular value of an eigenvector matrix of the channel response of the target layer, the target layer, or the like.

In an implementation, when the first information includes the indication information that indicates the terminal to send the eigenvalue or the singular value of the eigenvector matrix of the channel response of the target layer, the terminal further sends the eigenvalue or the singular value corresponding to the eigenvector matrix of the target layer to the access network device in addition to sending the eigenvector matrix of the target layer indicated by the terminal to the access network device. An eigenvalue is used as an example. An eigenvalue corresponding to an eigenvector at each target layer may include an eigenvalue corresponding to each eigenvector in an eigenvector matrix at the layer. For example, when an eigenvector matrix at one target layer includes three eigenvectors, the terminal may send eigenvalues corresponding to the three eigenvectors to the access network device. Alternatively, one eigenvalue may be sent for an eigenvector at each target layer. For example, the terminal may perform averaging, weighted averaging, or the like on eigenvalues of all eigenvectors included in an eigenvector matrix at the layer, and the terminal sends an average calculation result or the like of the eigenvalues to the access network device. In another implementation, a layer at which the terminal sends the eigenvalue or the singular value may alternatively be different from the foregoing layer at which the CSI is sent. In other words, the eigenvalue or the singular value sent by the terminal may not be the eigenvalue, the singular value, or the like of the eigenvector matrix of the target layer. For example, eigenvalues or singular values that are of eigenvector matrices at layers and that are sent by the terminal to the access network device may be predefined, specified in a protocol, or default. For example, it is predefined that the terminal sends eigenvalues, singular values, or the like of eigenvector matrices at all layers to the access network device.

For example, the access network device may send indication information to the terminal device, to indicate the terminal to send an eigenvalue, a singular value, or the like. The indication information may be configuration information, and may be described as that the access network device configures the terminal to send the eigenvalue, the singular value, or the like. In this embodiment of this application, the indication information that indicates the terminal to send the CSI at the target layer and the indication information that indicates the terminal to send the eigenvalue or the singular value may be carried in a same piece of information. For example, the first information in step 900 may further include the indication information that indicates the terminal to send the eigenvalue or the singular value of the eigenvector matrix at the target layer, in addition to the indication information that indicates the terminal to send the CSI at the target layer. Alternatively, the indication information that indicates the terminal to send the CSI at the target layer and the indication information that indicates the terminal to send the eigenvalue or the singular value may be independent. Further, the indication information of the eigenvalue or the singular value may carry the indication information at the target layer and the like, to indicate the terminal to send the eigenvalue, the singular value, or the like at the target layer to the access network device. Alternatively, a layer at which the terminal sends the CSI may be different from a layer at which the terminal sends the eigenvalue or the singular value. For example, the terminal sends an eigenvalue or a singular value at the first layer to the access network device. The first layer is not completely the same as the target layer. For example, the first layer may be indicated by the access network device, or may be preset, specified in a protocol, or default. This is not limited. For example, the terminal sends eigenvalues, singular values, or the like at all layers to the access network device based on a preset setting.

In an implementation, the access network device may further indicate a threshold to the terminal. The threshold indicates the terminal to send an eigenvector matrix whose eigenvalue or singular value is greater than or equal to the threshold to the access network device. The threshold may be carried in the first information in step 900. This is not limited. An eigenvalue is used as an example. That the eigenvalue is greater than or equal to the threshold may mean that eigenvalues corresponding to all eigenvectors of eigenvector matrices at a layer are all greater than or equal to the threshold, or eigenvalues corresponding to N eigenvectors in all eigenvectors of eigenvector matrices at a layer are greater than or equal to the threshold, or eigenvalues corresponding to all eigenvectors of eigenvector matrices at a layer may be calculated to obtain an eigenvalue, where the eigenvalue is greater than or equal to the threshold. As described above, the access network device may indicate the terminal device to send the CSI at the target layer. The CSI at the target layer includes the eigenvector matrix at the target layer. In an implementation, the target layer indicated by the access network device may be different from a layer calculated based on the foregoing threshold. In this case, an intersection set may be further obtained between the target layer and the layer, and the terminal may send, to the access network device, an eigenvector matrix at a layer on which the intersection set exists. For example, the access network device indicates the terminal to send eigenvector matrices at first, third, and fifth layers, and the first, third, and fifth layers may be considered as target layers. The layers that meet a condition are determined based on the threshold indicated by the access network device are second, third, and sixth layers. The terminal may use an intersection set of the two, and send an eigenvector matrix at the third layer to the access network device. In another implementation, the terminal may separately send the eigenvector matrix at the target layer, the eigenvector matrix that meets the threshold condition, and the like to the access network device. This is not limited. The foregoing example is still used. The terminal may separately send, to the access network device, eigenvector matrices at (first, third, and fifth) layers in the target layers indicated by the terminal and eigenvector matrices whose thresholds meet the condition at (second, third, and sixth) layers.

In an implementation, the access network device may further indicate a sending period, a sending pattern, or the like of the CSI at the target layer to the terminal. The indication information may be carried in the first information in step 900. This is not limited. The terminal sends the CSI at the target layer to the access network device based on the sending period indicated by the access network device. Further, the target layer includes at least one layer, and for example, sending periods of CSI at all layers may be the same or different. When sending periods of the CSI at all the layers are the same, one sending period may be configured for all layers in the target layer, or a sending period of the CSI at each target layer may be independently configured. The independently configured sending periods of the CSI at target layers may be the same or different. This is not limited. The sending pattern indicates CSI at specific layers that the terminal needs to send each time. For example, the sending pattern may be {first layer, second layer and third layer, first layer and third layer, and third layer and fourth layer}. In this case, the terminal may send CSI at the first layer to the access network device in a $1^{st}$ sending period. In a $2^{nd}$ sending period, the terminal sends CSI at the second layer and CSI at the third layer to the access network device. Similarly, in a $3^{rd}$ sending period and a $4^{th}$ sending period, the terminal separately sends the CSI at the first layer and the CSI at the third layer, the CSI at the third layer and CSI at the fourth layer, and the like to the access network device. For example, the sending pattern may be determined based on the target layer. In each sending period, the terminal sends CSI at a part of target layers to the access network device based on the sending pattern. For example, the target layer includes the first layer to the fourth layer. Based on the foregoing descriptions, the terminal sends the CSI at the part of target layers in each sending period. For example, in the $3^{rd}$ sending period, the terminal sends the CSI at the first layer and the CSI at the third layer to the access network device.

In an implementation, in addition to the indication information that indicates the terminal to send the CSI at the target layer, the first information in step 900 further includes indication information that indicates the terminal to send one or more of the following: the eigenvalue or the singular value of the eigenvector matrix at the target layer, the threshold of the eigenvalue or the singular value of the eigenvector matrix at the target layer, the sending period of the CSI at the target layer, the sending pattern of the CSI at the target layer, or the like.

In this embodiment of this application, the CSI sent by the terminal to the access network device is a channel response, compression information of the channel response, an eigenvector matrix, or compression information corresponding to the eigenvector matrix. This is different from conventional CSI that includes an RI, a CQI, a PMI, and the like and that is sent by the terminal to the access network device. For ease of differentiation, in this embodiment of this application, the CSI sent by the terminal may be referred to as ground truth (ground truth) CSI, and the CSI conventionally sent by the terminal is referred to as a conventional CSI.

In an implementation, the ground truth CSI and the conventional CSI may be independently sent. As described above, the terminal may send the first CSI report to the access network device, where the first CSI includes the CSI at the target layer, and the CSI at the target layer may be the ground truth CSI. Further, the terminal may send a second CSI report to the access network device, where the second CSI report includes the conventional CSI, that is, the second CSI report includes one or more of the following indication information: an RI, a CQI, a PMI, and the like, and a quantity of layers of PMIs is determined based on the RI. Optionally, a new CSI report quantity (report quantity) may be defined, and is used to send the ground truth CSI, for example, cir-tCSI. In the new type of CSI report, layers at which CSI is sent are indicated by the access network device, and are not affected by the RI determined by the terminal.

In another implementation, the ground truth CSI and the conventional CSI may be jointly sent, that is, the ground truth CSI and the conventional CSI may be sent in one CSI report. In addition to the CSI (ground truth CSI) at the target layer, the foregoing first CSI report may further include indication information of at least one of the following: an RI, a CQI, a PMI, or the like. A quantity of layers of PMIs is determined based on the RI. Optionally, a new CSI report quantity may be defined to send the ground truth CSI and the conventional CSI, for example, cri-RI-PMI-CQI-tCSI, cri-RI-CQI-tCSI, cri-RI-LI-PMI-CQI-tCSI, cri-RSRP-tCSI, or cri-SINR-tCSI.

In the procedure in FIG. 9, the terminal sends the CSI at the target layer to the access network device. The target layer may be any layer, and the target layer is not limited to being n layers with highest quality in conventional CSI sending. When receiving the CSI at the target layer, the access network device may use the CSI at the target layer as AI-related data. For example, the CSI at the target layer is used for one or more of the following: model training, model inference, model testing, model verification, or model monitoring.

In an implementation, the access network device may use the CSI at the target layer as training data to perform model training. Model training is an important part of machine learning. Essence of machine learning is to learn some features of a training set (including the training data), so that a difference between an output of a model and an ideal target value is as small as possible under training of the training set. Usually, even if a same network structure is used, weights and/or outputs of models trained by using different training sets may be different. Therefore, composition and selection of the training set determine performance of the model to some extent. Additionally/Alternatively, the access network device may use the CSI at the target layer as inference data to perform model inference. For example, the CSI at the target layer is used as the inference data and is input to a model, and an output is obtained by using the model. The output is an inference result. Additionally/Alternatively, the access network device may use the CSI at the target layer as testing data to perform model testing. For example, after model training is complete, a testing set (including the testing data) may be used to test a trained model, for example, to evaluate a generalization capability of a model, to determine whether model performance meets a requirement, or to determine whether the model is available. Alternatively, the access network device may use the CSI at the target layer as verification data to verify a model. Model verification is usually performed during model training. For example, each time the model is trained through one or more epochs (EPOCHs), a verification set (including the verification data) may be used to verify a current model, to monitor a model training status, for example, to verify whether underfitting, overfitting, or convergence is performed, and determine whether to finish the training. Optionally, in a model verification process, a hyperparameter of the model may be further adjusted. The hyperparameter may refer to at least one of the following parameters of the model: a quantity of layers of a neural network, a quantity of neurons, an activation function, a loss function, or the like. Additionally/Alternatively, the access network device may use the CSI at the target layer as monitoring data to monitor a model. For example, in a model inference process, model performance may be monitored. If accuracy of an inference result obtained through model inference is less than a threshold, information may be fed back to a model training node, and the model training node performs optimization, update, or the like on a deployed model. This process may also be referred to as model feedback.

In the procedure in FIG. 9, the access network device may need to perform an AI-related operation only on the target layer. For example, for a model, if performance of the target layer is poor, the access network device may collect the CSI at the target layer as training data, and perform model training and the like; or if the access network device expects to monitor model performance and the like only at the target layer, the access network device may collect the CSI at the target layer as monitoring data to perform model monitoring and the like. The access network device may send the first information to the terminal, to indicate the terminal to send the CSI at the target layer. The terminal sends the CSI at the target layer to the access network device based on an indication of the access network device, so that the access network device flexibly collects CSI at each layer based on different requirements. Further, the terminal sends CSI at a corresponding layer based on the indication of the access network device, so that the CSI sent by the terminal can meet a requirement of the access network device, to reduce air interface overheads of sending CSI at an unnecessary layer by the terminal.

An embodiment of this application provides another CSI sending method and CSI receiving method. For a difference from the foregoing methods, refer to the following descriptions in FIG. 11. A terminal may actively send CSI at a target layer to an access network device. For example, the terminal sends indication information at the target layer to the access network device, and the terminal sends the CSI at the target layer to the access network device. Alternatively, refer to the following descriptions in FIG. 12. An access network device may actively send CSI at a target layer to a terminal. For example, the access network device sends the indication information at the target layer to the terminal, and the access network device sends the CSI at the target layer to the terminal. The method includes: A first communication apparatus sends first information to a second communication apparatus, where the first information includes indication information for the first communication apparatus to send CSI at a target layer; and the first communication apparatus sends a first CSI report to the second communication apparatus, where the first CSI report includes the CSI at the target layer.

The first communication apparatus is a terminal, or a chip, a circuit, or the like used in the terminal. The second communication apparatus is an access network device, or a chip, a circuit, or the like used in the access network device. An example in which the first communication apparatus is the terminal and the second communication apparatus is the access network device is used, as shown in FIG. 11, to provide a procedure, including the following steps.

Step 1100: A terminal sends first information to an access network device, where the first information includes indication information that indicates the terminal to send CSI at a target layer.

For example, the first information may be the indication information, and the indication information indicates the terminal to send the CSI at the target layer.

Step 1101: The terminal sends a first CSI report to the access network device, where the first CSI report includes the CSI at the target layer.

In an implementation, the first information and the first CSI report may be in a same message. For example, the first CSI report carries the first information (also referred to as the indication information at the target layer). For example, the first information is carried in a first part of the first CSI report. In another implementation, the first information and the first CSI report may be in different messages. An association relationship between the first information and the first CSI report may be established by including an index of the first CSI report in the first information, or by including an index of the first information in the first CSI report. Alternatively, for example, an association relationship between the first information and the first CSI report may be predefined, specified in a protocol, or default. This is not limited. For example, there are a plurality of types of CSI reports, and it may be predefined that the first information indicates a layer at which CSI is sent in one or more types of CSI reports. Alternatively, within effective time of the first information, the first information may indicate layers of all CSI reports, or may indicate layers of predefined CSI reports, or the like. This is not limited.

A manner in which the first information indicates the target layer is similar to the manner of indicating the target layer in the foregoing procedure in FIG. 9. For example, the target layer is indicated by using a bitmap. Alternatively, the target layer may be indicated by using specific indication information. For example, 2 bits indicate four layers. If the specific indication information is 00, it indicates that the target layer indicated by the indication information is a first layer. Alternatively, a plurality of layer combinations may be pre-divided, and different layer combinations may be indicated by using indication information. For example, four layer combinations are pre-divided: a first layer, a second layer and a third layer, the first layer and the third layer, and the third layer and a fourth layer. In this case, the four layer combinations may be separately indicated by using 2 bits. For example, if the specific indication information is 10, it indicates that a layer combination indicated by the indication information is the first layer and the third layer, that is, the target layer is the first layer and the third layer.

In this embodiment of this application, the CSI at the target layer that is sent by the terminal to the access network device may be ground truth CSI. The CSI at the target layer includes one or more of the following indication information: a channel response of the target layer, compression and/or quantization information of the channel response of the target layer, an eigenvector matrix of the target layer, or compression and/or quantization information of the eigenvector matrix of the target layer. Further, the CSI at the target layer may include one or more of the following indication information: an eigenvalue or a singular value of the eigenvector matrix of the target layer, the target layer, or the like. For example, there may be a plurality of target layers, and when the terminal reports the CSI at the target layer to the access network device, a layer corresponding to each piece of CSI information may be separately indicated. For example, CSI information is an eigenvector matrix, and CSI information at each layer includes at least one eigenvector matrix. When sending the CSI at the target layer to the access network device, the terminal may separately indicate a layer corresponding to each eigenvector matrix. If all eigenvector matrices in the CSI information correspond to a same layer, the CSI information may indicate a corresponding layer, or may perform no indication. Alternatively, if a plurality of eigenvector matrices in the CSI information belong to a same layer, the plurality of eigenvector matrices may indicate a corresponding layer.

Similar to the procedure in FIG. 9, the CSI at the target layer that is included in the first CSI report is the ground truth CSI, and the ground truth CSI and conventional CSI may be jointly sent. Further, the first CSI report may include the conventional CSI. For example, the first CSI report may further include one or more of the following indication information: an RI, a CQI, or a PMI, and a quantity of layers of PMIs is determined based on the RI. Alternatively, the CSI at the target layer and the conventional CSI may be independently sent. For example, the terminal may further send a second CSI report to the access network device. The second CSI report includes one or more of the following indication information: an RI, a CQI, or a PMI. Similarly, in the conventional CSI, a quantity of layers of PMIs is determined based on the RI.

In an implementation, the terminal measures a downlink reference signal to obtain a measurement result; and the terminal determines CSI at different layers based on the measurement result. The terminal sends the CSI at the target layer to the access network device by using the method in the procedure in FIG. 11. It may be understood that the target layer may be any layer, and the target layer is not limited to being n layers with highest quality in conventional CSI sending. Because the access network device does not indicate the terminal to send CSI at specific layers, the terminal actively sends CSI information at the target layer to the access network device, and the terminal needs to notify the access network device of the target layer at which the CSI is sent. In other words, the terminal needs to send the first information in step 1100 to the access network device, to ensure that the access network device correctly understands the received CSI at the target layer. Optionally, when receiving the CSI at the target layer, the access network device may use the CSI at the target layer for one or more of the following: model training, model inference, model testing, model verification, model monitoring, or the like.

The first communication apparatus is an access network device, or a chip or a circuit used in the access network device. The second communication apparatus is a terminal, or a chip or a circuit used in the terminal. An example in which the first communication apparatus is the access network device and the second communication apparatus is the terminal is used, as shown in FIG. 12, to provide a procedure, including the following steps.

Step 1200: An access network device sends first information to a terminal, where the first information includes indication information that indicates the access network device to send CSI at a target layer.

For example, the first information may be indication information, and the indication information indicates the access network device to send the CSI at the target layer. For a manner in which the first information indicates the target layer, refer to the descriptions in FIG. 11.

Step 1201: The access network device sends the CSI at the target layer to the terminal.

In an implementation, the first information and the CSI at the target layer may be in a same message. For example, the first information is in the CSI at the target layer. Alternatively, the first information and the CSI at the target layer may be in different messages. For example, the first information carries indication information of the associated CSI at the target layer, or the CSI at the target layer carries indication information of the associated first information. Alternatively, for example, an association relationship between the first information and the CSI at the target layer may be predefined, specified in a protocol, or default. This is not limited. Alternatively, within effective time of the first information, the first information indicates a layer of all CSI information sent by the access network device, or indicates a layer of predefined CSI information, or the like.

For example, step 1202 may also be described as follows: The access network device sends a first CSI report to the terminal, where the first CSI report carries the CSI at the target layer.

For specific content included in the CSI at the target layer and the first information, refer to the foregoing descriptions in FIG. 11. A main difference between the embodiment in FIG. 12 and the embodiment in FIG. 11 lies in that: In the procedure in FIG. 11, the terminal actively sends the CSI at the target layer to the access network device. To enable the access network device to correctly understand the received CSI at the target layer, the terminal further needs to send, to the access network device, indication information at the target layer corresponding to the CSI. In the procedure in FIG. 12, the access network device actively sends the CSI to the terminal. To enable the terminal to correctly understand the received CSI at the target layer, the access network device further needs to send, to the terminal, indication information at the target layer corresponding to the CSI.

Same as the foregoing descriptions, the CSI at the target layer is ground truth CSI. The ground truth CSI and conventional CSI may be jointly sent. The first CSI report may further include one or more of the following indication information: an RI, a CQI, a PMI, or the like, and a quantity of layers of PMIs is determined based on the RI. Alternatively, the ground truth CSI and the conventional CSI may be separately sent, and the access network device may further send one or more of the following indication information to the terminal: an RI, a CQI, a PMI, or the like. The quantity of layers of PMIs is determined based on the RI.

Optionally, the terminal uses the received CSI at the target layer for one or more of the following: model training, model inference, model testing, model verification, model monitoring, or the like. For example, in an implementation, models are separately deployed on an access network device side and a terminal side, and the models on the access network device side and the terminal side need to cooperate with each other. For example, as shown in FIG. 10, the CSI generator is deployed on the terminal side, and the CSI reconstructor is deployed on the access network device side. In this case, the access network device may use collected CSI at all or a part of layers as training data, and perform model training on the CSI reconstructor. After completing training, the access network device may select the CSI at the target layer from the CSI at all the layers, and send the CSI at the target layer to the terminal. The terminal performs model training on the CSI generator on the terminal side by using the CSI at the target layer. In another implementation, an example in FIG. 10 is still used. If the terminal monitors model performance, the access network device may send restored CSI (that is, V' in FIG. 10) at the target layer to the terminal, and the terminal compares V' that is restored with V that is original, to determine the model performance, and the like.

It may be understood that, in this embodiment of this application:

1. In each procedure, differences between different procedures are emphasized. For descriptions of different procedures, refer to each other.

2. A sequence of steps in each procedure is not limited. For example, in the procedure in FIG. 9, the first information and the first CSI report may be sent together, or the first CSI report may be sent first, and then the first information is sent.

3. The following describes "indication": The indication may explicitly indicate corresponding information, or implicitly indicate corresponding information. This is not limited. For example, in the descriptions of this application, the first CSI report includes the indication information of the CSI at the target layer. In this case, the CSI at the target layer may be explicitly indicated. For example, the first CSI report includes the CSI at the target layer. Alternatively, the CSI at the target layer may be implicitly indicated. For example, if there is a correspondence between the CSI at the target layer and other information, the first CSI report may carry other information that has a correspondence with the CSI at the target layer, to indicate the CSI at the target layer.

4. In the descriptions of this application, unless otherwise specified, CSI refers to downlink CSI. In the foregoing descriptions, downlink CSI sending is also mainly used as an example for description. It may be understood that this is not intended to limit this application. In addition to downlink CSI sending, the solutions in embodiments of this application may be further used in another scenario, for example, used for uplink CSI sending.

It may be understood that, to implement the functions in the foregoing embodiments, the terminal and the access network device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

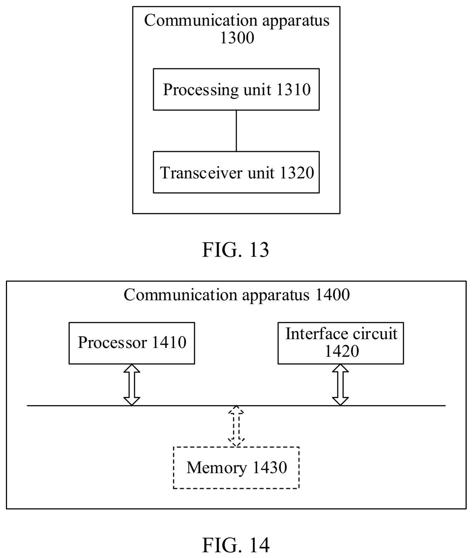

FIG. 13 and FIG. 14 are diagrams of structures of possible communication apparatuses according to embodiments of this application. These communication apparatuses may be configured to implement one or more corresponding functions in the foregoing method embodiments, for example, a function implemented by one or more of the terminal, the access network device, and the like. Therefore, beneficial effects of the foregoing method embodiments may be implemented.

As shown in FIG. 13, a communication apparatus 1300 includes a processing unit 1310 and a transceiver unit 1320. The communication apparatus 1300 is configured to implement one or more functions in the foregoing method embodiments, for example, a function implemented by one or more of a terminal, an access network device, or the like.

In a design, the communication apparatus 1300 is a terminal, or a chip, a circuit, or the like used in the terminal. When the communication apparatus 1300 is configured to implement a function of the terminal in FIG. 9, the transceiver unit 1320 is configured to receive first information from a second communication apparatus, where the first information includes indication information that indicates the first communication apparatus to send channel state information CSI at a target layer. Optionally, the processing unit 1310 is configured to generate a first CSI report. The transceiver unit 1320 is further configured to send the first CSI report to the second communication apparatus, where the first CSI report includes the CSI at the target layer. Optionally, the second communication apparatus may be an access network device, or a chip, a circuit, or the like used in the access network device.

In an implementation, the CSI at the target layer includes one or more of the following indication information: a channel response of the target layer, an eigenvector matrix of the target layer, compression and/or quantization information of the eigenvector matrix, or compression and/or quantization information of the channel response of the target layer.

In an implementation, the CSI at the target layer further includes one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In an implementation, the transceiver unit 1320 is further configured to send a second CSI report to the second communication apparatus, where the second CSI report includes one or more of the following indication information: an RI, a CQI, or a PMI, and a quantity of layers of PMIs is determined based on the RI.

In an implementation, the first information further includes indication information that indicates the first communication apparatus to send one or more of the following: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is sent by the first communication apparatus is used for one or more of the following: model training, model inference, model testing, model verification, or model monitoring.

In an implementation, the first information is configuration information, and the configuration information is used to configure the first communication apparatus to send the CSI at the target layer.

In another design, the communication apparatus 1300 is an access network device, or a chip, a circuit, or the like used in the access network device. When the communication apparatus is configured to implement a function of the access network device in FIG. 9, optionally, the processing unit 1310 is configured to generate first information; and the transceiver unit 1320 is configured to send the first information to a first communication apparatus, where the first information includes indication information that indicates the first communication apparatus to send channel state information CSI at a target layer; and receive a first CSI report from the first communication apparatus, where the first CSI report includes the CSI at the target layer. Optionally, the first communication apparatus may be a terminal, or a chip, a circuit, or the like used in the terminal.

In an implementation, the CSI at the target layer includes one or more of the following indication information: a channel response of the target layer, an eigenvector matrix of the target layer, compression and/or quantization information of the eigenvector matrix, or compression and/or quantization information of the channel response of the target layer.

In an implementation, the CSI at the target layer further includes one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In an implementation, the transceiver unit 1320 is further configured to receive a second CSI report from the first communication apparatus, where the second CSI report includes one or more of the following indication information: an RI, a CQI, or a PMI, and a quantity of layers of PMIs is determined based on the RI.

In an implementation, the first information further includes indication information that indicates the first communication apparatus to send one or more of the following: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is received by a second communication apparatus is used for one or more of the following: model training, model inference, model testing, model verification, or model monitoring.

In an implementation, the first information is configuration information, and the configuration information is used to configure the first communication apparatus to send the CSI at the target layer.

In a design, the communication apparatus 1300 is a terminal, or a chip, a circuit, or the like used in the terminal. When the communication apparatus is configured to implement a function of the terminal in FIG. 11, the communication apparatus is an access network device, or a chip or a circuit used in the access network device. When the communication apparatus is configured to implement a function of the access network device in FIG. 12, optionally, the processing unit 1310 is configured to generate first information; and the transceiver unit 1320 is configured to send the first information to a second communication apparatus, where the first information includes indication information that indicates a first communication apparatus to send channel state information CSI at a target layer; and send a first CSI report to the second communication apparatus, where the first CSI report includes the CSI at the target layer. Optionally, the second communication apparatus is an access network device, or a chip or a circuit used in the access network device. Alternatively, the second communication apparatus is a terminal, or a chip, a circuit, or the like used in the terminal.

In an implementation, the CSI at the target layer includes one or more of the following indication information: a channel response of the target layer, an eigenvector matrix of the target layer, compression and/or quantization information of the eigenvector matrix of the target layer, or compression and/or quantization information of the channel response of the target layer.

In an implementation, the CSI at the target layer may further include one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In an implementation, the transceiver unit 1320 is further configured to send a second CSI report to the second communication apparatus, where the second CSI report includes one or more of the following indication information: an RI, a CQI, or a PMI, and a quantity of layers of PMIs is determined based on the RI.

In an implementation, the first information further includes indication information that indicates the first communication apparatus to send one or more of the following of the target layer: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is sent by the first communication apparatus is used for one or more of the following: model training, model inference, model testing, model verification, or model monitoring.

In an implementation, the first information is the indication information, and the indication information indicates the first communication apparatus to send the CSI at the target layer.

In a design, the communication apparatus 1300 is an access network device, or a chip, a circuit, or the like used in the access network device. When the communication apparatus is configured to implement a function of the access network device in FIG. 11, the communication apparatus is a terminal, or is a chip or a circuit used in the terminal. When the communication apparatus is configured to implement a function of the terminal in FIG. 12, the transceiver unit 1320 is configured to: receive first information from a first communication apparatus, where the first information includes indication information that indicates the first communication apparatus to send channel state information CSI at a target layer; and receive a first CSI report from the first communication apparatus, where the first CSI report includes the CSI at the target layer. Optionally, the processing unit 1310 is configured to process the first information, the first CSI report, and the like.

In an implementation, the CSI at the target layer includes one or more of the following indication information: a channel response of the target layer, an eigenvector matrix of the target layer, compression and/or quantization information of the eigenvector matrix of the target layer, or compression and/or quantization information of the channel response of the target layer.

In an implementation, the CSI at the target layer may further include one or more of the following indication information: an eigenvalue or a singular value of the eigenvector matrix of the target layer, or the target layer.

In an implementation, the first CSI report further includes one or more of the following indication information: a rank indicator RI, a channel quality indicator CQI, or a precoding matrix indication PMI, and a quantity of layers of PMIs is determined based on the RI.

In an implementation, the transceiver unit 1320 is further configured to receive a second CSI report from the first communication apparatus, where the second CSI report includes one or more of the following indication information: an RI, a CQI, or a PMI, and a quantity of layers of PMIs is determined based on the RI.

In an implementation, the first information further includes indication information that indicates the first communication apparatus to send one or more of the following of the target layer: the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

In an implementation, the CSI at the target layer that is received by a second communication apparatus is used for one or more of the following: model training, model inference, model testing, model verification, or model monitoring.

In an implementation, the first information is the indication information, and the indication information indicates the first communication apparatus to send the CSI at the target layer.

For more detailed descriptions of the processing unit 1310 and the transceiver unit 1320, directly refer to the related descriptions in the foregoing method embodiments. Details are not described herein again.

As shown in FIG. 14, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions executed by the processor 1410, store input data required for running instructions by the processor 1410, or store data generated after the processor 1410 runs the instructions. Optionally, the processor 1410 may be configured to implement one or more functions in the foregoing method embodiments.

Specifically, the processor 1410 may execute the instructions in the memory 1430, to enable the communication apparatus 1400 to implement one or more functions in the foregoing method embodiments, for example, a function implemented by one or more of a terminal, an access network device, or the like.

When the communication apparatus 1400 is configured to implement the method shown in FIG. 9, FIG. 11, or FIG. 12, the processor 1410 is configured to implement the function of the processing unit 1310, and the interface circuit 1420 is configured to implement the function of the transceiver unit 1320.

When the communication apparatus is a terminal or a chip used in the terminal, the terminal or the chip in the terminal may implement a function of the terminal in the foregoing method embodiments. The chip in the terminal receives information from another module (for example, a radio frequency module or an antenna) in the terminal, where the information is sent by an access network device to the terminal. Alternatively, the chip in the terminal sends information to another module (for example, a radio frequency module or an antenna) in the terminal, where the information is sent by the terminal to an access network device.

When the foregoing communication apparatus is an access network device or a module used in the access network device, the access network device or the module in the access network device may implement a function of the access network device in the foregoing method embodiments. The module in the access network device receives information from another module (for example, a radio frequency module or an antenna) in the access network device, where the information is sent by a terminal to the access network device. Alternatively, the module in the access network device sends information to another module (for example, a radio frequency module or an antenna) in the access network device, where the information is sent by the access network device to a terminal. The module in the access network device herein may be a baseband chip of the access network device, or may be a DU or another module. The DU herein may be a DU in an open radio access network (open radio access network, O-RAN) architecture.

It may be understood that, in addition to an apparatus in wireless communication or a chip used in the apparatus, for example, the foregoing access network device or the terminal, the communication apparatus may alternatively be an apparatus that is in another communication system such as a Wi-Fi communication system and that bears one or more functions of an access network device or a terminal. This is not limited in this application. For example, in the Wi-Fi communication system, the apparatus that bears the functions of the access network device may be an access node, or a chip or a circuit used in the access node. The apparatus that bears functions of the terminal may be a terminal, or a chip, a circuit, or the like used in the terminal.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in the ASIC. In addition, the ASIC may be located in a base station or a terminal. Certainly, the processor and the storage medium may alternatively exist in a data quality measurement apparatus as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

**1.** A CSI sending method, applied to a first communication apparatus, and comprising:

receiving first information from a second communication apparatus, wherein the first information comprises indication information that indicates the first communication apparatus to send channel state information CSI at a target layer; and

sending a first CSI report to the second communication apparatus, wherein the first CSI report comprises the CSI at the target layer.

2.  The method according to claim 1, wherein the CSI at the target layer comprises one or more of the following indication information: a channel response of the target layer, an eigenvector matrix of the target layer, compression and/or quantization information of the eigenvector matrix, or compression and/or quantization information of the channel response of the target layer.

3.  The method according to claim 1 or 2, wherein the CSI at the target layer further comprises one or more of the following indication information: an eigenvalue or a singular value of the eigenvector matrix of the target layer, or the target layer.

4.  The method according to any one of claims 1 to 3, wherein the first CSI report further comprises one or more of the following indication information: a rank indicator RI, a channel quality indicator CQI, or a precoding matrix indication PMI, and a quantity of layers of PMIs is determined based on the RI.

5.  The method according to any one of claims 1 to 3, wherein the method further comprises:
    sending a second CSI report to the second communication apparatus, wherein the second CSI report comprises one or more of the following indication information: an RI, a CQI, or a PMI, and a quantity of layers of PMIs is determined based on the RI.

6.  The method according to any one of claims 1 to 5, wherein the first information further comprises indication information that indicates the first communication apparatus to send one or more of the following:
    the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

7.  The method according to any one of claims 1 to 6, wherein the CSI at the target layer that is sent by the first communication apparatus is used for one or more of the following: model training, model inference, model testing, model verification, or model monitoring.

8.  The method according to any one of claims 1 to 7, wherein the first information is configuration information, and the configuration information is used to configure the first communication apparatus to send the CSI at the target layer.

9.  A CSI receiving method, applied to a second communication apparatus, and comprising:

    sending first information to a first communication apparatus, wherein the first information comprises indication information that indicates the first communication apparatus to send channel state information CSI at a target layer; and
    receiving a first CSI report from the first communication apparatus, wherein the first CSI report comprises the CSI at the target layer.

10. The method according to claim 9, wherein the CSI at the target layer comprises one or more of the following indication information: a channel response of the target layer, an eigenvector matrix of the target layer, compression and/or quantization information of the eigenvector matrix, or compression and/or quantization information of the channel response of the target layer.

11. The method according to claim 9 or 10, wherein the CSI at the target layer further comprises one or more of the following indication information: an eigenvalue or a singular value of the eigenvector matrix of the target layer, or the target layer.

12. The method according to any one of claims 9 to 11, wherein the first CSI report further comprises one or more of the following indication information: a rank indicator RI, a channel quality indicator CQI, or a precoding matrix indication PMI, and a quantity of layers of PMIs is determined based on the RI.

13. The method according to any one of claims 9 to 11, wherein the method further comprises:

receiving a second CSI report from the first communication apparatus, wherein the second CSI report comprises one or more of the following indication information: an RI, a CQI, or a PMI, and a quantity of layers of PMIs is determined based on the RI.

14. The method according to any one of claims 9 to 13, wherein the first information further comprises indication information that indicates the first communication apparatus to send one or more of the following:
the eigenvalue or the singular value of the eigenvector matrix of the target layer, a threshold of the eigenvalue or the singular value of the eigenvector matrix of the target layer, a sending period of the CSI at the target layer, or a sending pattern of the CSI at the target layer.

15. The method according to any one of claims 9 to 14, wherein the CSI at the target layer that is received by the second communication apparatus is used for one or more of the following: model training, model inference, model testing, model verification, or model monitoring.

16. The method according to any one of claims 9 to 15, wherein the first information is configuration information, and the configuration information is used to configure the first communication apparatus to send the CSI at the target layer.

17. A communication apparatus, comprising a unit configured to perform the method according to any one of claims 1 to 8.

18. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 8 through a logic circuit or by executing code instructions.

19. A communication apparatus, comprising a processor and a memory, wherein the processor is coupled to the memory, and the processor is configured to implement the method according to any one of claims 1 to 8.

20. A communication apparatus, comprising a unit configured to perform the method according to any one of claims 9 to 16.

21. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 9 to 16 through a logic circuit or by executing code instructions.

22. A communication apparatus, comprising a processor and a memory, wherein the processor is coupled to the memory, and the processor is configured to implement the method according to any one of claims 9 to 16.

23. A computer-readable storage medium, wherein the storage medium stores a computer program or instructions, and when the computer program or the instructions are executed by a communication apparatus, the method according to any one of claims 1 to 8 is implemented, or the method according to any one of claims 9 to 16 is implemented.

24. A computer program product, comprising a computer program or instructions, wherein when the computer program or the instructions are run by an apparatus, the method according to any one of claims 1 to 8 or the method according to any one of claims 9 to 16 is performed.

25. A chip, comprising a processor, wherein the processor is coupled to a memory, and the processor is configured to execute a computer program or instructions stored in the memory, to enable the chip to implement the method according to any one of claims 1 to 8 or the method according to any one of claims 9 to 16.

26. A communication system, comprising a first communication apparatus and a second communication apparatus, wherein

the first communication apparatus is configured to implement the method according to any one of claims 1 to 8; and
the second communication apparatus is configured to implement the method according to any one of claims 9 to

16.

FIG. 1

FIG. 2

FIG. 3

FIG. 4

FIG. 5

FIG. 6

FIG. 7

FIG. 8

FIG. 9

FIG. 10

FIG. 11

FIG. 12

Communication apparatus
1300

Processing unit 1310

Transceiver unit 1320

FIG. 13

Communication apparatus 1400

Processor 1410

Interface circuit
1420

Memory 1430

FIG. 14

## INTERNATIONAL SEARCH REPORT

International application No.

**PCT/CN2023/134275**

### A. CLASSIFICATION OF SUBJECT MATTER

H04L1/06(2006.01)i

According to International Patent Classification (IPC) or to both national classification and IPC

### B. FIELDS SEARCHED

Minimum documentation searched (classification system followed by classification symbols)

IPC:H04L; H04W

Documentation searched other than minimum documentation to the extent that such documents are included in the fields searched

Electronic data base consulted during the international search (name of data base and, where practicable, search terms used)

3GPP, CNTXT, ENTXTC, VEN, WPABSC, CNKI: 层, 发送, 基站, 接入网设备, 某层, 目标层, 哪些层, 指示, 终端, CSI, send+, layer?, indicat+

### C. DOCUMENTS CONSIDERED TO BE RELEVANT

| Category* | Citation of document, with indication, where appropriate, of the relevant passages | Relevant to claim No. |
|---|---|---|
| PX | CN 116260552 A (HUAWEI TECHNOLOGIES CO., LTD.) 13 June 2023 (2023-06-13) description, paragraphs [0064]-[0198], and figures 1-14 | 1-26 |
| X | CN 103368699 A (ZTE CORP.) 23 October 2013 (2013-10-23) description, paragraphs [0038]-[0102], and figures 1-6 | 1-26 |
| A | CN 112398518 A (DATANG MOBILE COMMUNICATIONS EQUIPMENT CO., LTD.) 23 February 2021 (2021-02-23) entire document | 1-26 |
| A | US 2022060919 A1 (QUALCOMM INC.) 24 February 2022 (2022-02-24) entire document | 1-26 |
| A | US 2022264557 A1 (QUALCOMM INC.) 18 August 2022 (2022-08-18) entire document | 1-26 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 February 2024** | **18 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134275**

| Patent document cited in search report | | | Publication date (day/month/year) | Patent family member(s) | | | Publication date (day/month/year) |
|---|---|---|---|---|---|---|---|
| CN | 116260552 | A | 13 June 2023 | None | | | |
| CN | 103368699 | A | 23 October 2013 | None | | | |
| CN | 112398518 | A | 23 February 2021 | None | | | |
| US | 2022060919 | A1 | 24 February 2022 | EP | 3912416 | A1 | 24 November 2021 |
| | | | | EP | 3912416 | A4 | 12 October 2022 |
| | | | | WO | 2020147741 | A1 | 23 July 2020 |
| | | | | WO | 2020147104 | A1 | 23 July 2020 |
| US | 2022264557 | A1 | 18 August 2022 | US | 11700610 | B2 | 11 July 2023 |
| | | | | WO | 2022177686 | A1 | 25 August 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310126151